# EUROPÄISCHE PATENTANMELDUNG

(11) **EP 1 923 249 A2**
(43) Veröffentlichungstag der Anmeldung: **21.05.2008**
(21) Anmeldenummer: 07021055.4
(22) Anmeldetag: 27.10.2007
(51) Int. Cl.: B60J 7/14

(54) **Cabriolet-Fahrzeug mit einem abwärts verlagerbaren hinteren Dachteil**

(30) Priorität: 18.11.2006 DE 102006054395
(71) Anmelder: Wilhelm Karmann GmbH, 49084 Osnabrück (DE)
(72) Erfinder: Spickermann, Cristian, 49124 Georgsmarienhütte (DE)

(57) **Zusammenfassung**

Ein Cabriolet-Fahrzeug (1) mit einem ablegbaren Dach (2), das an jeder Fahrzeugseite einen im geschlossenen Zustand gegen eine Seitenscheibe (4) dichtende und vom Bereich einer Fensterbrüstungslinie (5) aufragenden Säulenteil (7) umfasst, der zur Dachöffnung insgesamt heckwärts und abwärts und verlagerbar ist und dabei zumindest über einen Teil der Bewegung bereichsweise mit einer in Fahrzeugquerrichtung einwärts gerichteten Komponente (10) verlagerbar ist, wird so ausgebildet, dass zur Verlagerung in Fahrzeugquerrichtung eine der Karosserie (3) zugeordnete Führungsbahn (9;109) vorgesehen ist, die zumindest einen Abschnitt mit einer in Fahrzeugquerrichtung weisenden Komponente (10) umfasst.

## Beschreibung

Die Erfindung betrifft ein Cabriolet-Fahrzeug mit einem Dach, das an jeder Fahrzeugseite einen im geschlossenen Zustand gegen eine Seitenscheibe dichtenden und vom Bereich einer Fensterbrüstungslinie aufragenden Säulenteil umfasst, der zumindest über einen Teil der Dachöffnungsbewegung bereichsweise in Fahrzeugquerrichtung einwärts verlagerbar ist, nach dem Oberbegriff des Anspruchs 1.

Es ist bekannt, einen aufragenden Hauptsäulenteil, an dem der Bezugsstoff eines Softtops gehalten ist und der mit einer über seinen Verlauf erstreckten Dichtungslinie zur Abdichtung gegenüber Seitenscheiben versehen ist, über einen schräg im Fahrzeug liegenden Zugkörper während der Dachöffnungsbewegung an seinem unteren Ende quer einwärts zu ziehen. Der Zugkörper ist dabei als Koppelstange ausgebildet und einenends an einem Kugelkopf auf dem Hauptsäulenteil sowie anderenends an einem dem karosserieseitigen Hauptlager zugeordneten Kugelkopf jeweils gelenkig gelagert. Die Quereinwärtsverlagerung dient dazu, einerseits bei geschlossenem Zustand des Daches einen innigen Kontakt des Säulenteils mit einer Dichtung an der Fensterbrüstungslinie und an den Seitenscheiben sicherzustellen und andererseits die Dachbewegung ohne reibenden Kontakt des Säulenteils zu diesen Dichtungen oder anderen Teilen der Fensterbrüstungslinie zu ermöglichen.
Die bekannte Einleitung von Zugkraft über die ganze Bewegung bewirkt eine kontinuierlich gleichmäßige Einwärtsverlagerung des Säulenteils, was häufig den äußeren Gegebenheiten mit einer Überwindung der Fensterbrüstungslinie nur im Anfangsstadium der Öffnungsbewegung nicht gut gerecht wird.

Da das Dach zudem bzgl. seiner Lage zur Karosserie Fertigungstoleranzen aufweist, wird in der Produktion ein Sortiment von verschieden langen Koppelstangen bereitgestellt, aus denen der montierende Arbeiter je nach Relativlage des Daches die passende heraussucht. Dieses Verfahren ist zeitaufwendig und bedingt einen erhöhten logistischen Aufwand. Eine Längeneinstellbarkeit der Zugstangen würde zwar die Zahl der bereitzustellenden Bauteile verringern, jedoch wäre eine solche Einstellung in der laufenden Produktion noch zeitaufwendiger.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein Dachmodul mit den Merkmalen des Anspruchs 11. Vorteilhafte Ausgestaltungen und Weiterbildungen der Erfindung sind in den weiteren Ansprüchen 2 bis 10 angegeben.

Dadurch, dass der Säulenteil zu seiner Verlagerung in Fahrzeugquerrichtung an einer der Karosserie zugeordneten Führungsbahn gehalten ist, ist die Querverlagerung des Säulenteils je nach Fertigung der Führungsbahn an die jeweilige Fahrzeuggeometrie möglich, ohne dass bei der Dachöffnung eine kontinuierliche Einwärtsverlagerung des Säulenteils erfolgen müsste.

Insbesondere kann die Führungsbahn im oberen Bereich ihres Verlaufs einen gegenüber ihrem unteren Bereich stärker in Querrichtung einwärts gekrümmten Verlauf zeigen. Das Dach wird dann in der Anfangsphase seiner Öffnungsbewegung stark quer einwärts bewegt und kann dadurch mit hinreichendem Querabstand zur Fensterbrüstungslinie an dieser vorbeigeführt werden, wohingegen der untere Bereich der Führungsbahn im wesentlichen ohne Querkomponente verlaufen kann, da unterhalb der Fensterbrüstungslinie im allgemeinen keine Notwendigkeit besteht, den Säulenteil noch weiter einwärts zu ziehen. Im Gegenteil kann dort sogar auch wieder die Führungsbahn eine nach außen weisende Komponente aufweisen, um den Säulenteil so weit wie möglich nach außen zu führen und damit den Kofferraum zu optimieren.

Vorteilhaft kann der Säulenteil an seinem unteren Ende während der Bewegung in der Führungsbahn zwangsweise geführt sein, so dass zuverlässig bei jeder Bewegung dieselbe Bahnkurve durchlaufen wird. Diese Führung in der festen Führungsbahn kann die ganze Bewegung - und nicht nur den Teil mit Querverlagerung - betreffen. Ein Rausspringen aus der Führungsbahn oder ähnliche Störungen sind dann zuverlässig verhindert.

Wenn zur Führung des Säulenteils in der Führungsbahn ein von dem Säulenteil ausgreifender Zapfen oder dergleichen Führungsglied vorgesehen ist, kann die Führungsbahn zum eigentlichen Säulenteil beabstandet liegen, also etwa deutlich unterhalb der Fensterbrüstungslinie, und damit von außen verdeckt und nicht sichtbar.

Zudem kann besonders vorteilhaft die Ausrichtung des Zapfens oder dergleichen Führungsglieds quer zum Fahrzeug justierbar sein. Damit können Fertigungstoleranzen des Daches oder des Rohbaus ausgeglichen werden, ohne dass ein Sortiment von verschiedenen, toleranzabhängig einzusetzenden Teilen vorgehalten werden müsste. Der Toleranzausgleich kann zum Beispiel durch einen exzenterförmigen Zapfenkopf oder ein Ein- oder Ausdrehen des Zapfenkopfes auf einer quer verlaufenden Achse erfolgen.

Zusätzlich oder alternativ kann auch die Ausrichtung der Führungsbahn an sich quer zum Fahrzeug möglich sein.

In beiden Fällen ist es besonders günstig, wenn die Führungsbahn an einem Hauptlager für die Dachbewegung anmontiert und als Teil eines Dachmoduls vor dessen Einbau in einen Rohbau der Karosserie gegenüber dem Dach ausrichtbar ist. Dann kann die bereits fertig ausgerichtete Einheit vor Einbau in den Rohbau auf Funktion getestet werden; der Einbau kann dann am Band ohne Zeitaufwendung für einen Toleranzausgleich erfolgen.

Weitere Vorteile und Merkmale der Erfindung ergeben sich aus in der zeichnung schematisch dargestellten und nachfolgend beschriebenen Ausführungsbeispielen des Gegenstandes der Erfindung.

In der Zeichnung zeigt:
- Fig. 1: eine schematische, perspektivische und nach vorne abgebrochene Ansicht des hinteren und bzgl. der Fahrtrichtung linken Fahrzeugbereichs eines erfindungsgemäßen Cabriolet-Fahrzeugs bei geschlossenem Dach, von dem hier nur das Dachgestänge teilweise und ohne übergreifenden Bezug dargestellt ist,
- Fig. 2: einen Ausschnitt auf den der Fensterbrüstung benachbarten unteren Bereich des Säulenteils, etwa dem Detail II in Fig. 1 entsprechend, mit zur besseren Übersicht durchsichtig dargestelltem äußerem Seitenteil,
- Fig. 3: eine Ansicht auf den in Figur 2 dargestellten Bereich von vorne und schräg oben bei geschlossenem Dach,
- Fig. 4: eine ähnliche Ansicht wie Fig. 3 bei beginnender Dachöffnung mit nach hinten schwenkendem Säulenteil,
- Fig. 5: eine ähnliche Ansicht wie Fig. 4 bei weiter fortschreitender Dachöffnung,
- Fig. 6: eine ähnliche Ansicht wie Fig. 5 bei vollständig abgelegtem Dach,
- Fig. 7: eine Ansicht auf den Bereich nach Fig. 2 von schräg hinten bei geschlossenem Dach,
- Fig. 8: eine ähnliche Ansicht wie Fig. 7 während der beginnenden Dachöffnung, etwa entsprechend der Dachstellung nach Fig. 3,
- Fig. 9: eine ähnliche Ansicht wie Fig. 8 während der weiter fortschreitenden Dachöffnung und einer Lage des Führungszapfens im Übergangsbereich eines quer verlagernden zu einem bezüglich der Fahrzeuglängsrichtung geradlinigem Bereich der Führungsbahn,
- Fig. 10: eine ähnliche Ansicht wie Fig. 9 während der weiter fortschreitenden Dachöffnung und einer Lage des Führungszapfens bezüglich der Fahrzeuglängsrichtung geradlinigem Bereich der Führungsbahn,
- Fig. 11: eine ähnliche Ansicht wie Fig. 10 während der weiter fortschreitenden Dachöffnung,
- Fig. 12: eine Detailansicht des in der Führungsbahn geführten Führungszapfens während der Dachbewegung in Dachstellung nach Fig. 9,
- Fig. 13: eine perspektivische Ansicht von schräg oben hinten auf eine Alternativversion mit durchgehend gekrümmter Führungsbahn bei geschlossenem Dach,
- Fig. 14: eine Detailansicht eines alternativen und bezüglich einer Fahrzeugquerachse ausrichtbaren Führungszapfens in der Führungsbahn bei geschlossenem Dach.

Ein erfindungsgemäße Cabriolet-Fahrzeug 1 kann entweder als mit zumindest einer Rückbank versehenes vier- oder mehrsitziges Fahrzeug oder als Zweisitzer ausgebildet sein.

Im Ausführungsbeispiel bildet das bewegliche und in geschlossener Stellung mittelbar oder unmittelbar an einen Windschutzscheibenrahmen (nicht gezeichnet) anschließende Dach 2 ein insgesamt mit einem durchgehenden Bezug überzogenes Soft-Top. Das Dach 2 kann manuell oder voll- oder teilautomatisch zu bewegen sein.

Das Dach 2 ist zu seiner Öffnung im hinteren Fahrzeugbereich ablegbar. Hierzu ist eine Eintrittsöffnung in die Karosserie 3 vorgesehen, die bei Dachöffnung vom Dach 2 ganz oder teilweise durchlaufen wird. Im vorliegenden Ausführungsbeispiel ist das Dach 2 über eine sog. Z-Faltung in der Karosserie 3 ablegbar, wobei das im geschlossenen Zustand mit einem Windschutzscheibenrahmen verbundene vordere Dachende seine Orientierung im abgelegten Zustand beibehält, also auch in abgelegter Stellung mit der Außenseite nach oben weist. Dies ist jedoch nicht zwingend. Ein erfindungsgemäßes Cabriolet-Fahrzeug kann ohne hinteren Spannbügel und ohne einen Verdeckkastendeckel auskommen. Das Dach 2 kann mit dem hinteren Rand seines Bezugs an der Karosserie 3 befestigt sein.

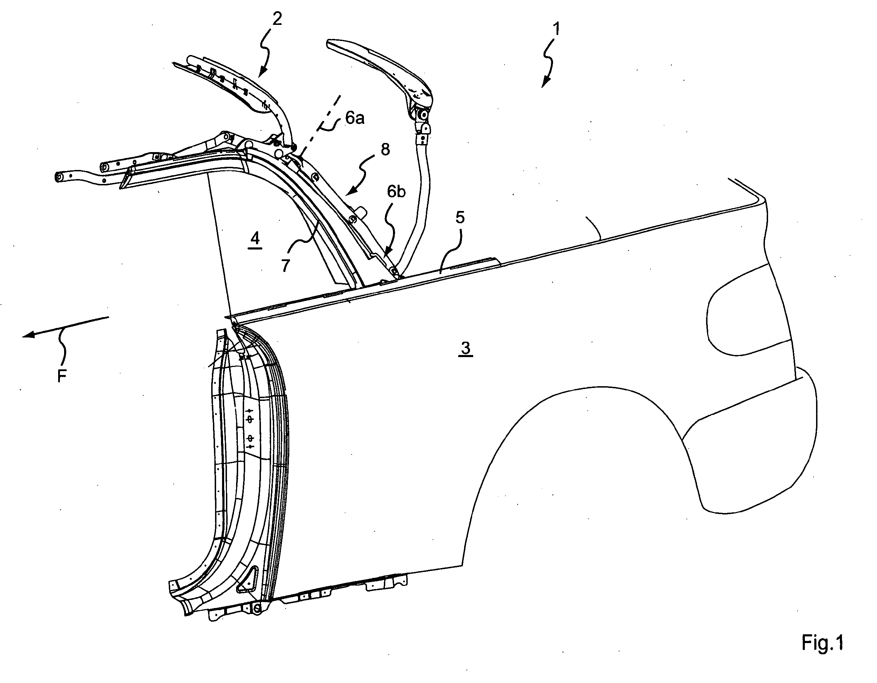

An jeder Fahrzeugseite (in Figur 1 ist der bezüglich der Fahrtrichtung F linke Teil dargestellt) weist das Dach 2 einen im geschlossenen Zustand gegen eine Seitenscheibe 4 dichtende und vom Bereich einer Fensterbrüstungslinie 5 aufragenden Säulenteil 7 auf. Dieser Säulenteil 7 ist Bestandteil einer mehrteiligen Hauptsäule 8. Diese ist zur Dachöffnung insgesamt heckwärts und abwärts und verlagerbar, zum Beispiel schwenkbar. Die Hauptsäule 8 bildet üblicherweise einen Teil eines noch einen zweiten aufragenden Schwenklenker 15 umfassenden Schwenkparallelogramms - oder zumindest Viergelenks - für die Dachbewegung. Die Hauptsäule 8 kann bei geschlossenem Dach 2 (Fig. 1) auf der Fensterbrüstungslinie 5 aufstehen oder etwas unterhalb von dieser enden. Die Fensterbrüstungslinie 5 kann in diesem Bereich eine Ausnehmung 5a aufweisen, um das Öffnen des Daches 2 zu erleichtern und den erforderlichen Querverlagerungsweg zu minimieren.

Zumindest über einen Teil dieser Bewegung ist der Säulenteil 7 zusätzlich auch bereichsweise gegenüber einem in einer in Fahrzeuglängsrichtung liegenden Ebene verbleibenden Bereich an einer Achse 6a und in einem Langloch 6b bereichsweise quer beweglich. Diese Querbewegung erfolgt bei Dachöffnung mit einer einwärts gerichteten Komponente, so dass sich im unteren Bereich der Säulenteile 7 die Dachbreite während der Öffnung verkleinert. Für diese Verlagerung in Fahrzeugquerrichtung ist eine der Karosserie zugeordnete Führungsbahn 9, 109 vorgesehen, die zumindest einen Abschnitt 10 mit einer Komponente in Fahrzeugquerrichtung umfasst.

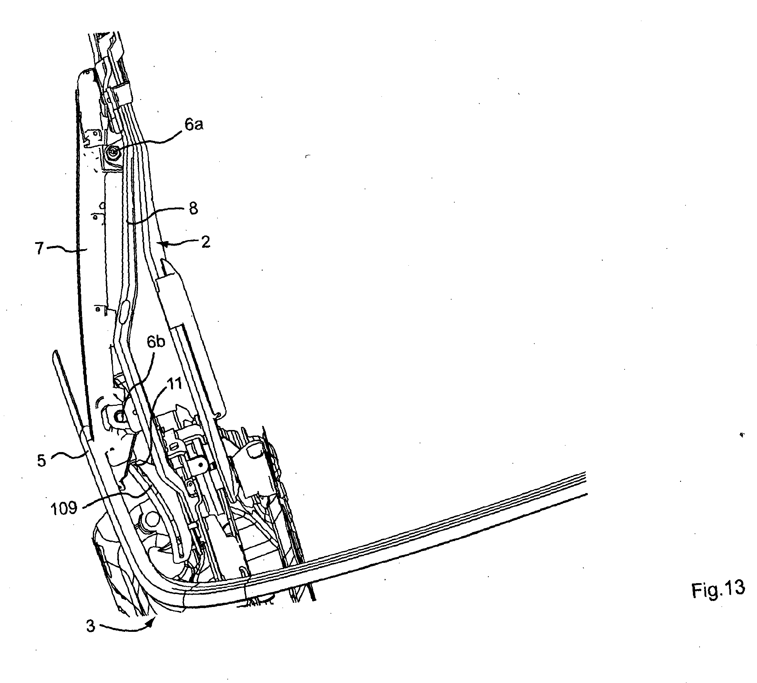

Dieser kann, wie an der kulissenartigen Führungsbahn 109 des zweiten Ausführungsbeispiels (Fig. 13) dargestellt, sich über den gesamten Verlauf des Führungsbahn 109 erstrecken, oder wie im ersten Ausführungsbeispiel nur einen Teil des Längsverlaufs der Führungsbahn 9 einnehmen.

In beiden Fällen ist der Säulenteil 7 an seinem unteren Ende während der Bewegung in der Führungsbahn 9 bzw. 109 zwangsweise geführt, so dass Fehlbedienungen ausgeschlossen sind.

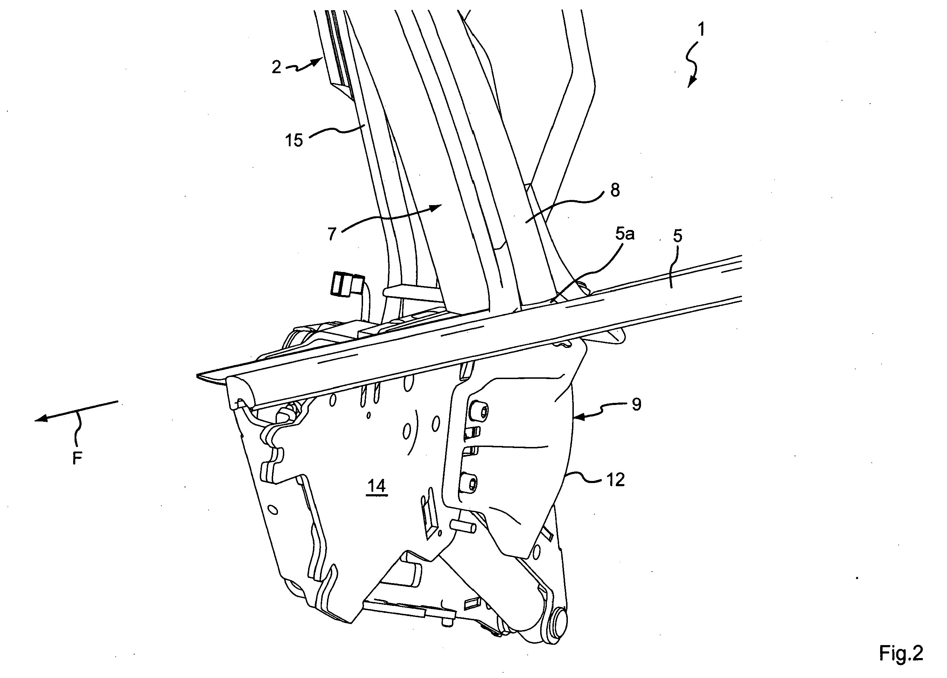

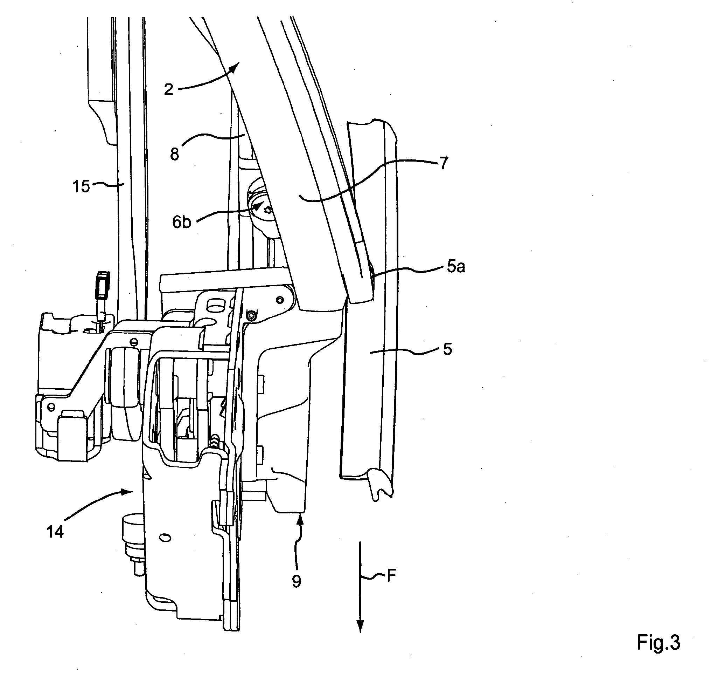

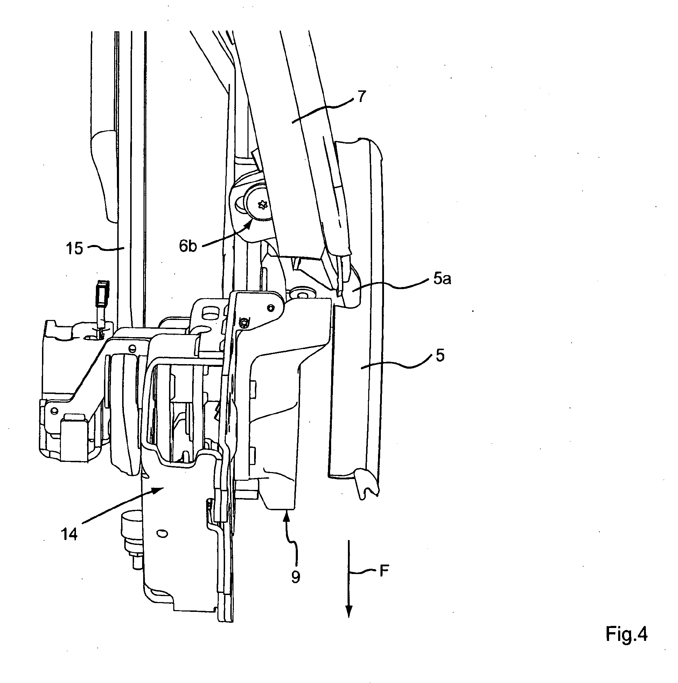

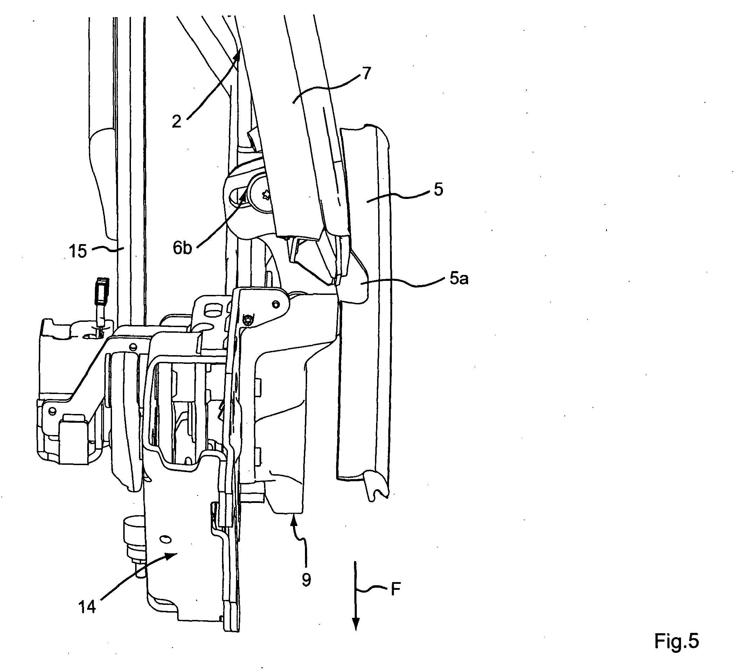

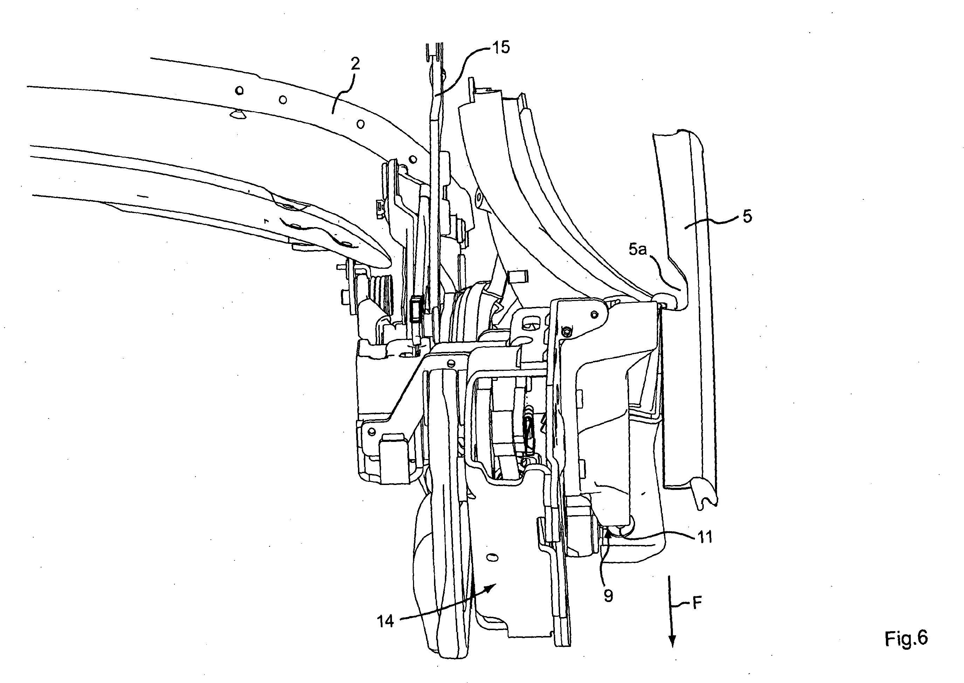

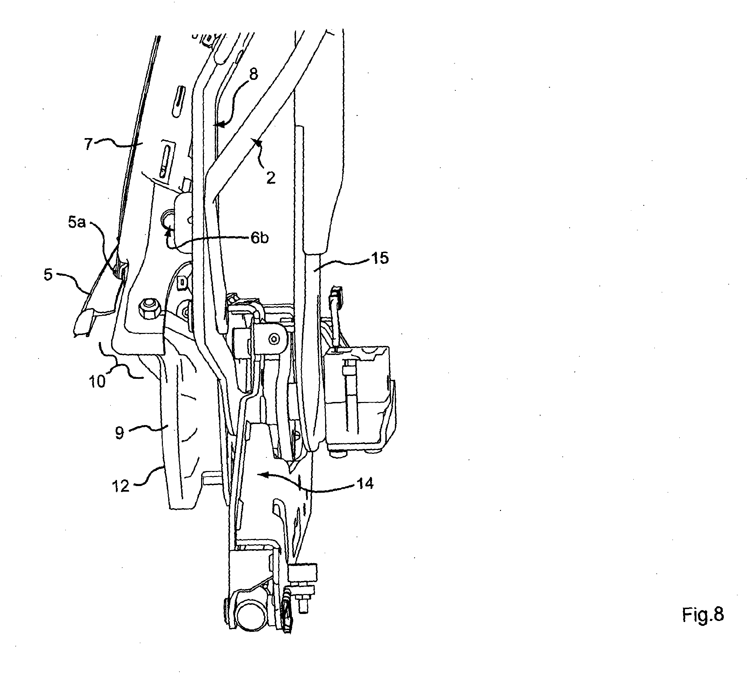

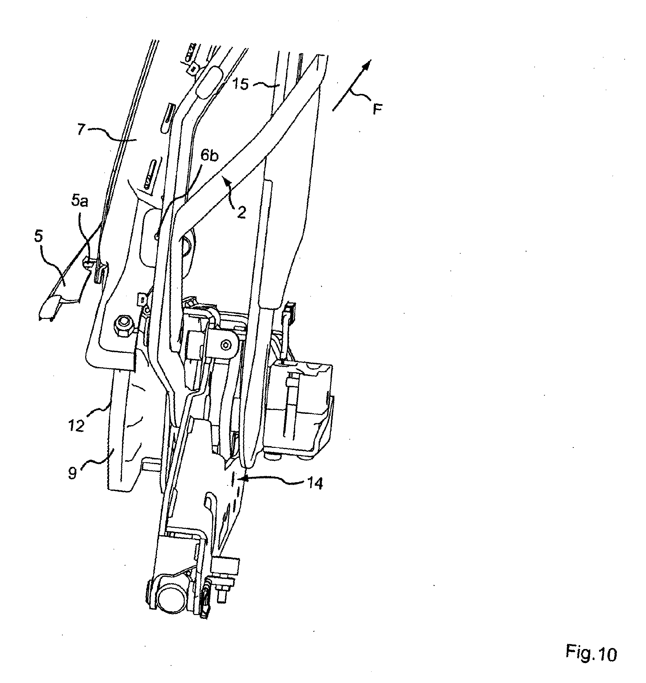

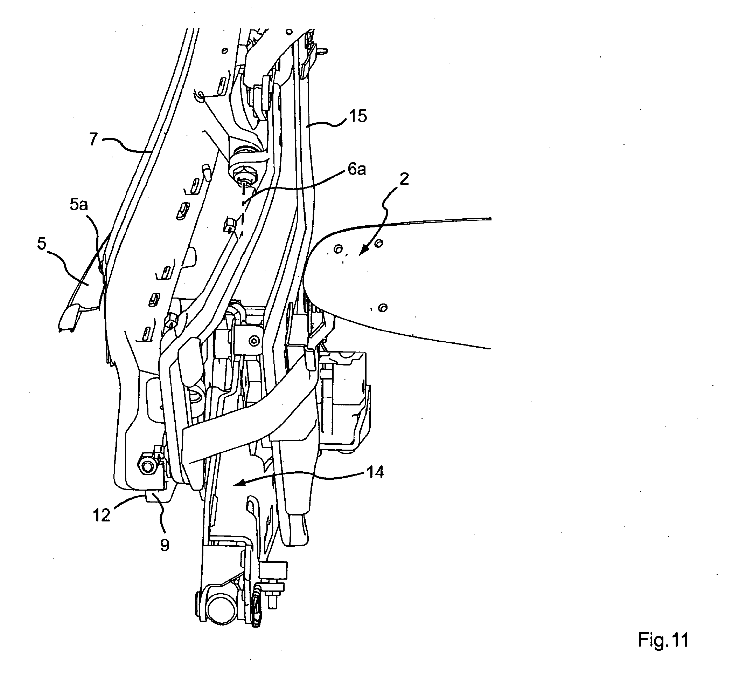

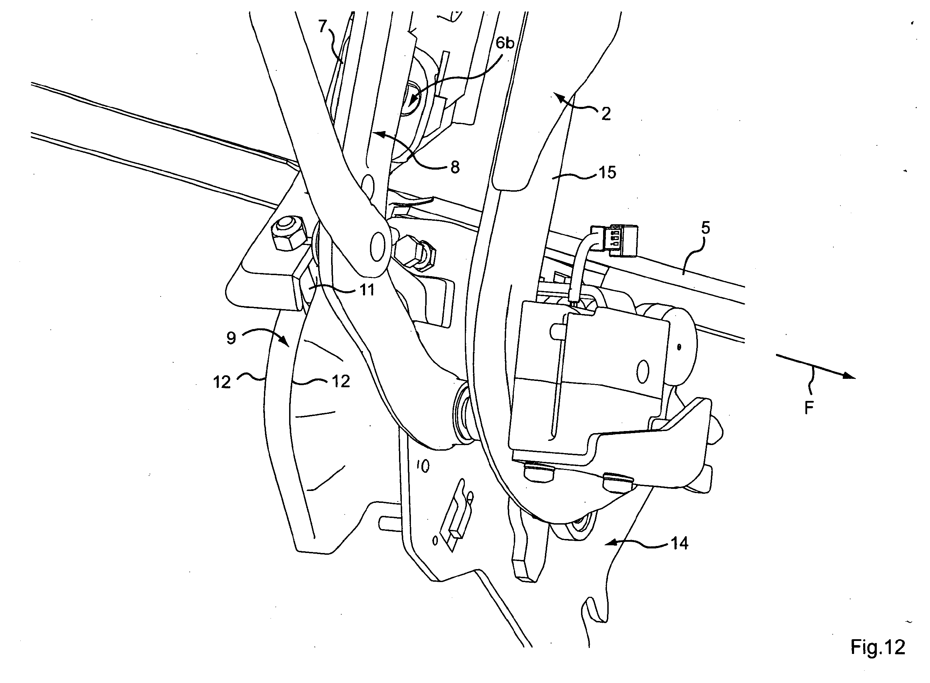

Für diese Führung dient im ersten Ausführungsbeispiel (Fig. 1 bis Fig. 12) und auch im zweiten Ausführungsbeispiel (Fig. 13) ein von dem Säulenteil 7 im wesentlichen in dessen Verlängerung ausgreifender zapfen 11. Um diesen sicher einzufassen, bildet die Führungsbahn 9 einen von seitlich ungefähr in Fahrzeuglängsrichtungen liegenden Wandungen 12 begrenzten Kanal oder eine entsprechende Kulisse (Fig. 13). Ein Herausspringen des Zapfens 11 aus der Führungsbahn 9, 109 ist dann sicher verhindert. Der Kanal mit den Wandungen 12 kann einstückig ausgebildet sein und zum Beispiel ein Gussteil aus Metallwerkstoff oder eine Baueinheit aus Kunststoff-Spritzguss darstellen. Der Zapfen 11 oder dergleichen Führungsglied 111 kann in dem Kanal abrollen oder gleiten und insbesondere für den letzten Fall mit einer reibungsvermindernden Beschichtung, zum Beispiel einer PDFE-Beschichtung, versehen sein.

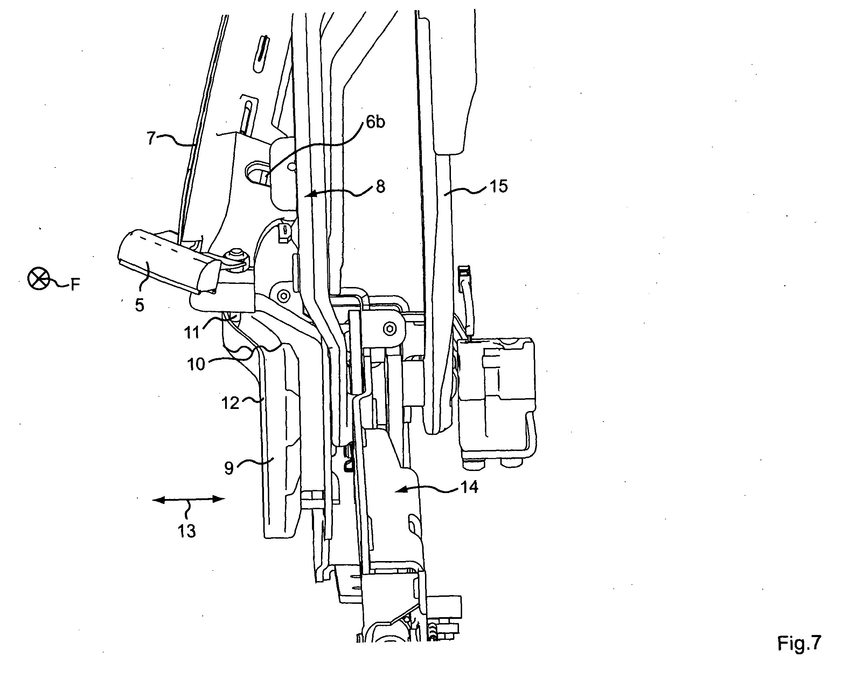

Die Führungsbahn 9 ist in den schräg von hinten gesehenen Darstellungen der Figuren 7 bis 11 gut erkennbar. Ihre Ausrichtung quer zum Fahrzeug kann in Richtung der Pfeile 13 justierbar sein. Die Führungsbahn 9 ist hier an einer am Rohbau der Karosserie 3 festzulegenden Hauptlagereinheit 14 für die Bewegung des Daches 2 angeordnet, so dass die Querausrichtung schon vor Montage an die Karosserie 3 vorgenommen werden kann. So kann eine bereits fertig ausgerichtete Einheit als Dachmodul fertiggestellt und vor Einbau in den Rohbau auf Funktion getestet werden; der Einbau kann dann am Band ohne Zeitaufwendung für einen Toleranzausgleich erfolgen.

Die Führungsbahn 9, 109 beschreibt hier in Seitenansicht ein Kreisbogensegment, ungefähr einen Halbkreis, so dass die Ablagebewegung der Hauptsäule 8 eine reine Schwenkbewegung sein kann. Die Länge der Führungsbahn beträgt typisch etwa 10 bis 20 Zentimeter.

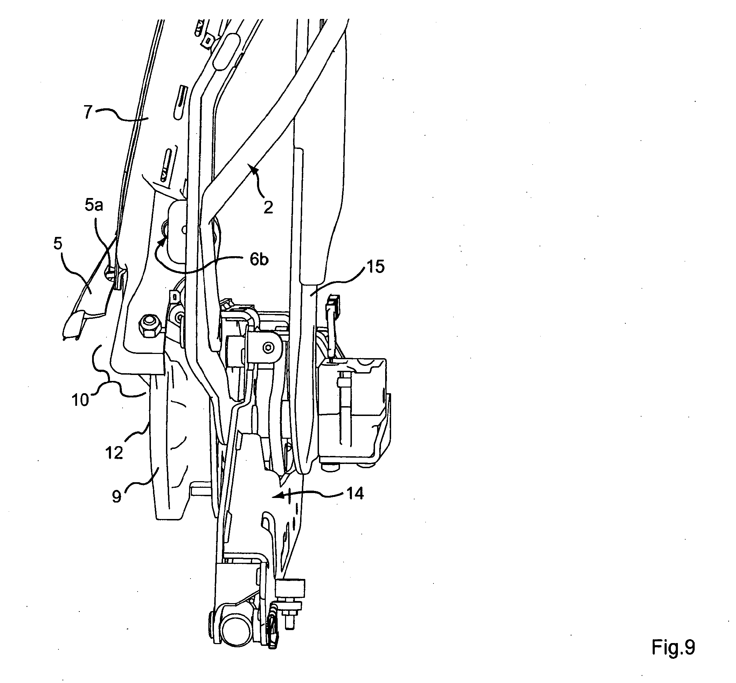

Im ersten Ausführungsbeispiel weist der obere Bereich 10 der Führungsbahn 9 eine maßgebliche Komponente in Querrichtung auf. Dadurch kann in der Anfangsphase der Dachöffnung der Säulenteil 7 stark einwärts verlagert werden und um die Fensterbrüstung herumgeführt werden. Der Verlagerungsweg in Fahrzeugquerrichtung beträgt typisch nur etwa 0,5 bis drei Millimeter. Im unteren Bereich der Führungsbahn 9 muss keine oder nur eine geringe Bewegung des Säulenteils 7 in Fahrzeugquerrichtung mehr erforderlich sein. Dieser untere Bereich, in den der Zapfen 11 ungefähr in Stellung nach Figur 9 eintritt, kann dann (fast oder vollständig) parallel zu einer vertikalen und in Fahrzeuglängsrichtung liegenden Ebene verlaufen.

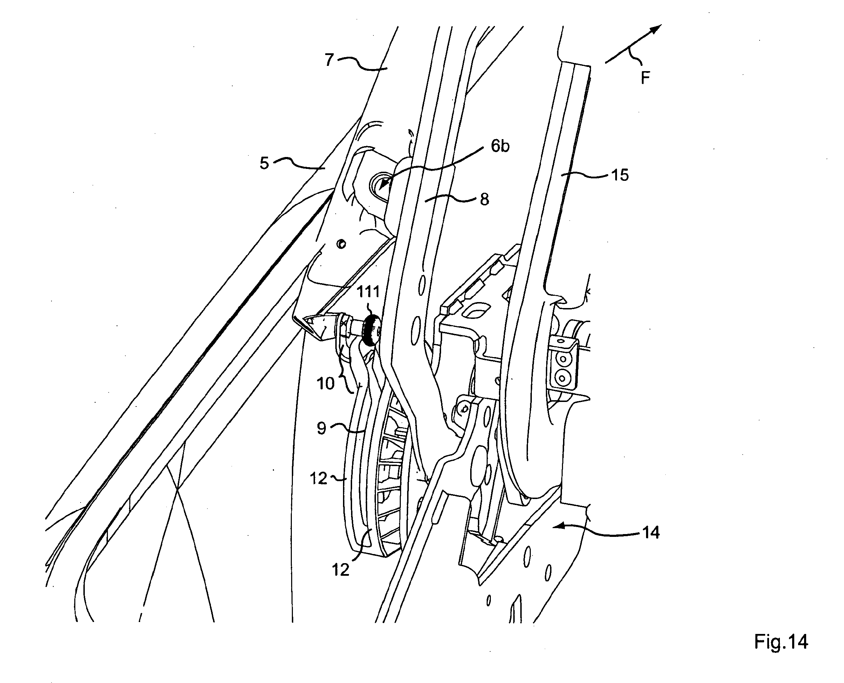

In der Darstellung nach Fig. 14 ist alternativ zur oben beschriebenen Ausrichtung der Führungsbahn 9 eine Querverstellbarkeit des Führungsglieds 111 dargestellt. Dieses dort rollenartig ausgebildete Führungsglied 111 kann einfach in Richtung des Pfeils auf dem Querträger, der ihn hält, manuell auf einem Gewinde weiter ein- oder auswärts gedreht werden und damit seine Querausrichtung variieren. Alternativ könnte auch ein ähnlicher Zapfen wie im ersten Ausführungsbeispiel an seinem ausgreifenden Ende einen Exzenter aufweisen, durch dessen Verdrehung zur Zapfenachse der Zapfen insgesamt quer ein- oder auswärts justierbar wäre.

In jedem Fall ist es entbehrlich, ein Sortiment mit unterschiedlichen Zuggliedern für die Querverlagerung bereitstellen zu müssen. Die Montage ist dadurch schnell möglich. Die Ausrichtungsmöglichkeit am Dachmodul vor Einbau in die Karosserie bedeutet einen zusätzlichen Montagevorteil, da dann bei Einsetzen des Dachmoduls in den Rohbau keinerlei Ausrichtungsarbeiten mehr erforderlich sind, was die Montagezeit weiter verkürzt.

## Patentansprüche

1. Cabriolet-Fahrzeug (1) mit einem ablegbaren Dach (2), das an jeder Fahrzeugseite einen im geschlossenen Zustand gegen eine Seitenscheibe (4) dichtende und vom Bereich einer Fensterbrüstungslinie (5) aufragenden Säulenteil (7) umfasst, der zur Dachöffnung insgesamt heckwärts und abwärts verlagerbar ist und dabei zumindest über einen Teil der Bewegung bereichsweise mit einer in Fahrzeugquerrichtung einwärts gerichteten Komponente (10) verlagerbar ist,
**dadurch gekennzeichnet,**
**dass** zur Verlagerung in Fahrzeugquerrichtung eine der Karosserie (3) zugeordnete Führungsbahn (9;109) vorgesehen ist, die zumindest einen Abschnitt mit einer in Fahrzeugquerrichtung weisenden Komponente (10) umfasst.

2. Cabriolet-Fahrzeug (1) nach Anspruch 1,
**dadurch gekennzeichnet,**
**dass** der Säulenteil (7) an seinem unteren Ende während der Bewegung in der Führungsbahn (9;109) zwangsweise geführt ist.

3. Cabriolet-Fahrzeug (1) nach Anspruch 2,
**dadurch gekennzeichnet,**
**dass** zur Führung des Säulenteils (7) in der Führungsbahn (9;109) ein von dem Säulenteil (7) ausgreifender Zapfen (11) oder dergleichen Führungsglied (111) vorgesehen ist.

4. Cabriolet-Fahrzeug (1) nach Anspruch 3,
**dadurch gekennzeichnet,**
**dass** die Ausrichtung des Zapfens (11) oder dergleichen Führungsglieds (111) quer zum Fahrzeug (1) justierbar ist.

5. Cabriolet-Fahrzeug (1) nach einem der Ansprüche 1 bis 4,
**dadurch gekennzeichnet,**
**dass** die Ausrichtung der Führungsbahn (9;109) quer zum Fahrzeug (1) justierbar ist.

6. Cabriolet-Fahrzeug (1) nach einem der Ansprüche 1 bis 5,
**dadurch gekennzeichnet,**
**dass** der Säulenteil (7) zur Dachöffnung nach hinten schwenkbar ist und die Führungsbahn (9;109) in Seitenansicht ein Kreisbogensegment beschreibt.

7. Cabriolet-Fahrzeug (1) nach einem der Ansprüche 1 bis 6,
**dadurch gekennzeichnet,**
**dass** die Führungsbahn (9) im oberen Bereich ihres Verlaufs einen gegenüber ihrem unteren Bereich stärker in Querrichtung einwärts gekrümmt verläuft.

8. Cabriolet-Fahrzeug (1) nach Anspruch 7,
**dadurch gekennzeichnet,**
**dass** der untere Bereich der Führungsbahn (9) im wesentlichen ohne Querkomponente verläuft.

9. Cabriolet-Fahrzeug (1) nach einem der Ansprüche 1 bis 8,
**dadurch gekennzeichnet,**
**dass** die Führungsbahn (9;109) an einem Hauptlager (14) der Dachbewegung anmontiert und als Teil eines Dachmoduls vor dessen Einbau in einen Rohbau der Karosserie (3) relativ zum Dach (2) ausrichtbar ist.

10. Cabriolet-Fahrzeug (1) nach einem der Ansprüche 1 bis 9,
**dadurch gekennzeichnet,**
**dass** die Führungsbahn (9) einen von seitlich ungefähr in Fahrzeuglängsrichtungen liegenden Wandungen (12) begrenzten Kanal oder eine entsprechende Kulisse (109) bildet.

11. Fahrzeugdach (2) für ein Cabriolet-Fahrzeug (1) nach einem der Ansprüche 1 bis 10.
